(19) Europäisches Patentamt / European Patent Office / Office européen des brevets

(11) **EP 1 921 194 A1**

(12) **EUROPEAN PATENT APPLICATION**
published in accordance with Art. 153(4) EPC

(43) Date of publication:
**14.05.2008 Bulletin 2008/20**

(51) Int Cl.:
*D06C 19/00* (2006.01)    *B32B 5/26* (2006.01)
*D04H 1/42* (2006.01)    *D06C 17/00* (2006.01)

(21) Application number: **06767010.9**

(22) Date of filing: **20.06.2006**

(86) International application number:
**PCT/JP2006/312351**

(87) International publication number:
**WO 2006/137413 (28.12.2006 Gazette 2006/52)**

(84) Designated Contracting States:
**DE FR GB**

(30) Priority: **20.06.2005 JP 2005179311**

(71) Applicant: **Sato, Keiko**
**Tokyo**
**110-0002 (JP)**

(72) Inventor: **Sato, Keiko**
**Tokyo**
**110-0002 (JP)**

(74) Representative: **Scott, Susan Margaret et al**
**Abel & Imray,**
**20 Red Lion Street**
**London WC1R 4PQ (GB)**

(54) **LACE-LIKE FELT AND PROCESS FOR PRODUCING THE SAME**

(57)    An object is to provide a manufacturing method in which pilling is intentionally caused to continuously obtain a lacy felt with voids formed in a hole shape.

A carded wrap is sent to a felting device. The felting device has a base 10, a fabric (canvas) 11 provided on the base, a fabric (canvas) 12, a sheet felt 13, the fabric (canvas) 12, a wrap 14, the fabric (canvas) 12, the sheet felt 13, and a felting plate 15 being disposed in this order. The wrap is interposed between the fabrics inside of the sheet felts 13, and after steaming, the wrap is felted at a predetermined temperature for a predetermined time by the felting plate. With this, pilling is forcefully caused, and the finished fabric is a felt with voids (lacy felt). Felting is performed by causing the hardener plate to make an eccentric movement with respect to the wrap. By adjusting the degree of eccentricity, the amount of the wrap, and a felting time, a voidage can be made to be a desired degree.

FIG. 2

PROCESS 2 ⇒    ⇒ PROCESS 4

**Description**

TECHNICAL FIELD

The present invention relates to a novel felt and a method of manufacturing the felt and, in particular, to a lacy felt on which pilling is intentionally caused to have voids evenly on the entire surface, and a method of manufacturing the felt.

BACKGROUND ART

Felt is generally used as houseware or industrial goods, and normally has a flat shape with a uniform surface, that is, a sheet shape. In manufacturing processes of the felt, at a felting step, pilling (fuzzballs) may partially occur, resulting in a felt with holes. When such a felt product was produced, the product is removed as a defective. Meanwhile, for example, there is a filter using a porous felt (for example, refer to Patent Document 1). However, no example of use as a product in view of pilling is known to the inventor.
Patent Document 1: Japanese Patent Application Publication No. JP-A-7-126428 (claim 5, paragraph 0036).

DISCLOSURE OF THE INVENTION

The inventor has paid attention to the pilling described above, which is a cause of a defective in the felt manufacturing process. The inventor has also paid attention to the fact that if the degree of occurrence of pilling is intentionally controlled, that is, if the distribution and magnitude of pilling is controlled, a felt fabric with unprecedented feel and texture can be manufactured. However, pilling occurs conventionally in the course of felt manufacturing when a felting operation is incomplete, and has varying sizes. Rather, conventionally, eliminating the occurrence of pilling means obtaining an excellent felt product Therefore, although effort has been made for that purpose, there has conventionally been no method of controlling the degree of occurrence of pilling itself.

Therefore, it is an object of the present invention to obtain a lacy felt with voids in a hole shape by intentionally causing a pilling and making the pilling in a certain distribution state, and to provide a manufacturing method in which such a lacy felt is continuously obtained.

To solve the above problem, in the method of manufacturing a lacy felt according to the present invention, a wrap (fiber cotton) with a felting property interposed between sheet felts with fabrics is disposed on a fabric (canvas), further a fabric (canvas) is placed on the wrap, and felting is performed from above.

Also, according to the present invention, the wrap is simply made of wool.
Further, according to the present invention, the wrap may be made of wool and a natural fiber other than wool.
Still further, according to the present invention, the wrap may be made of wool and a chemical fiber.
Still further, according to the present invention, the wrap may be made of any one of wool, a natural fiber other than wool, and a chemical fiber.
That is, in the present invention, the wrap is simply made of wool, is made of wool and a natural fiber other than wool, is made of wool and a chemical fiber, or is made of wool, a natural fiber other than wool, and a chemical fiber.
Still further, the chemical fiber is a temperature-sensitive fiber.
Still further, according to the present invention, by forcefully causing pilling through the above manufacturing method, a lacy felt with voids is obtained.
Still further, according to the present invention, the lacy felt with the voids obtained through the above manufacturing method is used for a glass product as explained below.

The above chemical fiber includes a fiber with its color changing depending on a certain temperature zone. Here, the "fiber with its color changing depending on a certain temperature zone" means a polyvinylidene-chloride synthetic fiber (for example, there is a fiber known as "SARAN", which is a trademark of The Dow Chemical Company and Asahi Kasei Corporation). Hereinafter, this fiber is referred to as a "temperature-sensitive fiber".
The temperature-sensitive fiber is manufactured through a method (spun-dyeing) of mixing, into a fiber, special thermochromic microcapsules that become transparent when heated, and can be designed so that arbitrary temperature changes occur from 0°C to 50°C. For example, when the temperature-sensitive fiber is formed in a manner such that a red temperature-sensitive pigment is mixed into a blue material to make purple, only the red capsules become transparent when heated and the blue color is developed. The above color change can be reversibly repeated any number of times.
Also, glass products in which the felt obtained according to the present invention is interposed between glass materials, that is, glass products such as windowpanes, sash doors, partitions, decorative objects, flooring materials, wall materials, and lighting equipment, can be made with excellent see-through characteristic, heat shielding, ultraviolet shielding, and the like.

BRIEF DESCRIPTION OF THE DRAWINGS

[FIG. 1] FIG. 1 is a drawing of an outline of a lacy-felt manufacturing process.
[FIG. 2] FIG. 2 is a drawing of a positional relationship between a wrap and an apparatus in a felting process.
[FIG. 3] FIG. 3 is a schematic drawing of a lacy felt with a large voidage.
[FIG. 4] FIG. 4 is a schematic drawing of a lacy felt with a medium voidage.
[FIG. 5] FIG. 5 is a schematic drawing of a lacy felt with a small voidage.
[FIG. 6] FIG. 6 is a drawing of an example in which a lacy felt manufactured through the manufacturing method according to the present invention is interposed between glass materials.
[FIG. 7] FIG. 7 shows a voidage measurement example for test samples with large, medium, and small ratios of voids.

BEST MODES FOR CARRYING OUT THE INVENTION

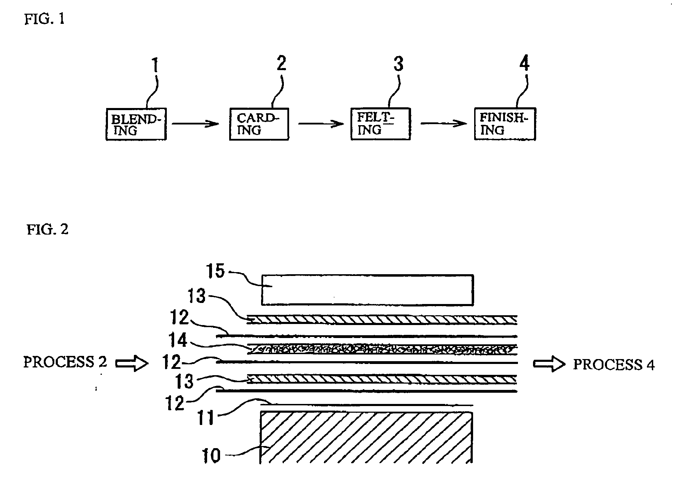

A manufacturing method according to the present invention is described below.
A general felt manufacturing process is schematically depicted in FIG. 1. In a process 1 of FIG. 1, raw materials are blended. As raw materials, any is selected from wool, chemical fibers, and recovered materials according to the purpose, quality, price, and the like. In a press felt of the present invention, wool alone or a mixture of wool, as a main material, and another fiber is used. For example, a fiber blend of wool and other natural fibers (silk or animal hair such as cashmere) or chemical fibers (rayon, polyester, or a temperature-sensitive fiber) is used. To obtain a lacy felt with a desired voidage, natural fibers and chemical fibers are combined as appropriate.

In a carding (disentangling) process 2, a raw material obtained by blending natural fibers and other fibers is placed between pieces of card clothing on which many needles with their tips bent at a predetermined angle with respect to the base fabric are planted with a predetermined density, and the upper and lower pieces of card clothing are moved in predetermined directions with their speeds varied from each other. With this, each fiber of the raw material obtained through blending is disentangled. After extension, a film (web) shape is obtained as a whole, and is wounded around a roll as a wrap (the above processes 1 and 2 are identical to conventional processes).

Then, the rolled wrap is sent from the roll to the next hardener (felting) process 3.
The hardener process is a characteristic portion of the present invention. As schematically depicted in FIG. 2, at a portion where felting is performed, the device has a base 10, a fabric (canvas) 11 provided on the base, a fabric (canvas) 12, a sheet felt 13, the fabric (canvas) 12, a wrap 14, the fabric (canvas) 12, the sheet felt 13, and a felting plate 15 being disposed in this order from below in the schematic drawing.

To achieve a predetermined weight, the wrap is interposed between the fabrics inside of the sheet felts 13, and after steaming, the wrap is rubbed by a hardener (felting) plate at a predetermined temperature for a predetermined time, so as to be felted. In this process, pilling is forcefully caused, and therefore the finished fabric is a felt with voids (lacy felt). The voids are not complete voids but are in a state where the voids are bridged with several to several tens of fibers of the raw material and many voids are formed among the fibers. Even if a complete void is present, the number of such voids is small. In this process, it is important that the wrap is felted as being interposed between the sheet felts and the fabrics.

As with the conventional method, felting is performed by causing the hardener plate to make an eccentric movement with respect to the wrap. The degree of eccentricity is 5 to 10 mm, for example. Also, the time required for felting is defined according to the thickness of the lacy felt, and is approximately one to ten minutes. The thicker the felt thickness, the longer the required time. To achieve a desired voidage, the felting time is defined as appropriate.

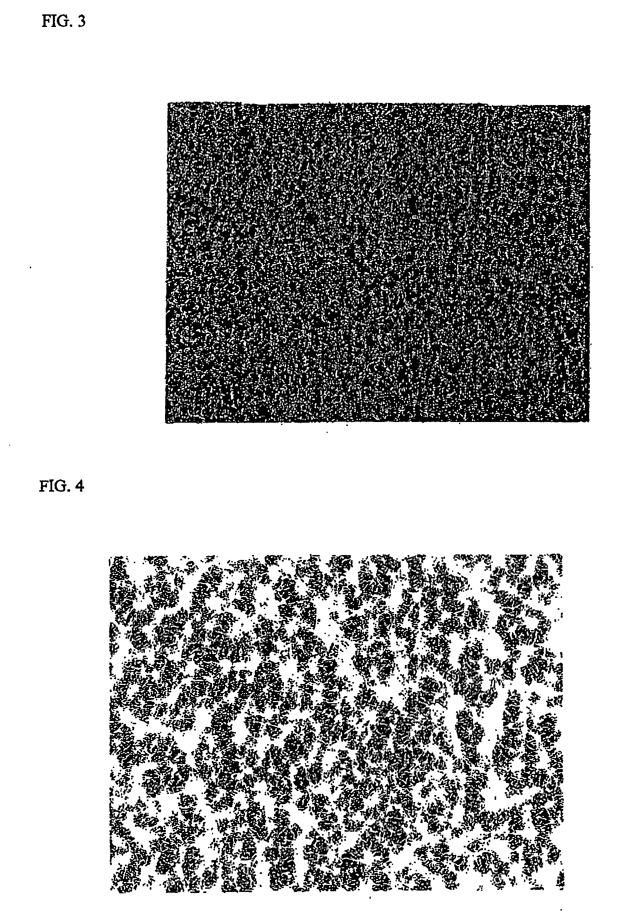

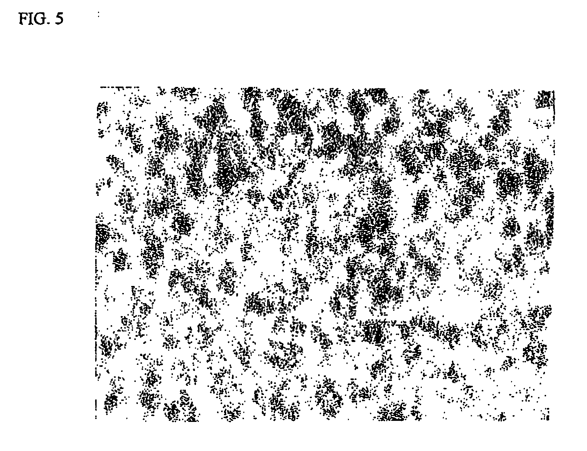

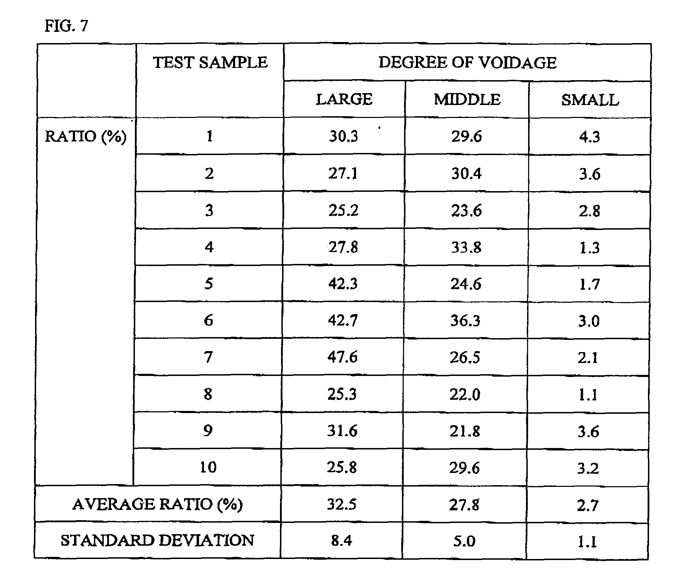

In the felting process, as the amount of the wrap per unit area is larger, the finished product is more like a sheet shape with a low voidage and a large thickness, whilst as the amount of the wrap is smaller, the finished product has a large voidage and a small thickness although it is in a sheet shape. By adjusting the amount of the wrap and the felting time, the voidage can be changed to a desired degree. In the example manufactured according to the present invention, FIG. 3 depicts a case with a large voidage, FIG. 4 depicts a case with a medium voidage, and FIG. 5 depicts a case with a small voidage. FIG. 7 depicts an example of voidage measurement. In the measurement, each test sample was divided into ten measuring about 1.5 cm per side to form test pieces and put them on the base, an image was captured by Microscope (VH-5000C from Keyence Corporation), and an area of the voids and an area of fiber portions of the felt were measured by image processing software (VH Analyzer) to calculate a ratio of a void portion. The ratio (%) was based on the following equation.

$$Ratio (\%)=\{(an\ area\ of\ a\ portion\ of\ felt\ fibers)/[(the\ area\ of\ the\ portion\ of\ felt$$

$$fibers)+(an\ area\ where\ felt\ fibers\ are\ not\ present)]\}\times100$$

In the measurement example of FIG. 7, although the voidage varied depending on the cut-out test piece, the average ratio of a test sample with a large voidage was 32.5%, that of a test sample with a medium voidage was 27.8%, and that with a small voidage was 2.7%.

The material finished with the hardener process is moved to a finishing process 4. In the finishing operation, as with the conventional method, an inspection is performed. The finished product is wounded around the roll, and is cut out as appropriate for application to a desired product, such as clothing, ornamentation, sundry articles, or furniture. As described above, the method of manufacturing felt subjected to felting according to the present invention includes:

1) mixing and blending wool or other fibers with a predetermined amount of water;
2) placing the material obtained through blending between pieces of card clothing on which many needles with their tips bended at a predetermined degree with respect to the base fabric are planted with a predetermined density, moving the upper and lower pieces of card clothing in predetermined directions with their speeds varied from each other to disentangle each fiber obtained through blending, and after extension, forming a wrap shape as a whole; and
3) obtaining a felt with voids by disposing the wrap as being interposed between the sheet felts so that the wrap has a predetermined weight and, after steaming, rubbing the wrap by the hardener plate at a predetermined temperature for a predetermined time, thereby felting the wrap and forcefully causing pilling.
In the above, the processes of 1) and 2) are not particularly different from the conventional processes.

(Examples of application of the material manufactured according to the present invention to products)

The lacy felt obtained according to the present invention can be used for, by way of example, blouses, shawls, and the like as apparel. The lacy felt can also be used for glass products, such as things obtained by interposing between glass materials the felt with voids formed by forcefully causing pilling, that is, housing-related equipment and products, such as windowpanes, sash doors, partitions, decorative objects, flooring materials, wall materials, and lighting equipment.

Conventionally, although windowpanes and sash doors can prevent view from outside by using paper screens and curtains inside or using a reflective film or cloth, they may not achieve a satisfactory design or a see-through ratio, and therefore improvements have been desired. To get around this problem, there is an example in which a fabric is used for a windowpane, which is disclosed in Japanese Patent Application Publication No. JP-A-2004-308403. In the invention of this earlier application, in a double-glass window, a fabric is interposed between two glass materials to achieve effects similar to those of curtains and blinds.

By contrast, the voidage of the lacy felt according to the present invention can be changed relatively arbitrarily. Therefore, when the lacy felt is used for a windowpane, sash door, partition, or others, the see-through ratio from the outside can be set as desired, thereby securing privacy as appropriate and also improving design quality.

For example, the case is described in which the lacy felt obtained according to the present invention is interposed between two glass plates. In this case, the lacy felt having a desired voidage manufactured as descried above is disposed between two glass materials, and the lacy felt is cut out to a desired size according to the size of the glass plates (so as to cover the entire glass or so as to partially block a view, by way of example), and is interposed between the glass plates in a sheet shape. Due to interposition between the glass materials, the thickness of the lacy felt is preferably approximately 1 mm. Also, with the combination of the color of the glass plates and the color of the lacy felt, when the lacy felt is applied to a windowpane in a house, building, or the like, for example, the degree of opaqueness from the outside can be changed. Also, because of a double glass, the finished product is excellent in view of light shielding and security.

Also, as described above, when the lacy felt is used for not only a windowpane or sash door but also a partition in a room, the lacy felt interposed between the glass materials can have an arbitrarily-designed pattern, thereby achieving excellent design quality.

Furthermore, in addition to the use of the entire surface of the lacy felt between the glass materials, by cutting the interposed lacy felt in an arbitrary shape, design quality in shape is increased. Also, because of a double glass, an effect of crime prevention can be achieved. Furthermore, by changing a mixture ratio of fibers of the lacy felt or by adding an additive to the fibers, shielding of ultraviolet light, shielding of heat waves, and flame resistance can be improved compared to the original values of the fibers.

Still further, when a temperature-sensitive fiber is used as a part of the material, the color of the felt is changed in response to a temperature change, thereby achieving high design quality.

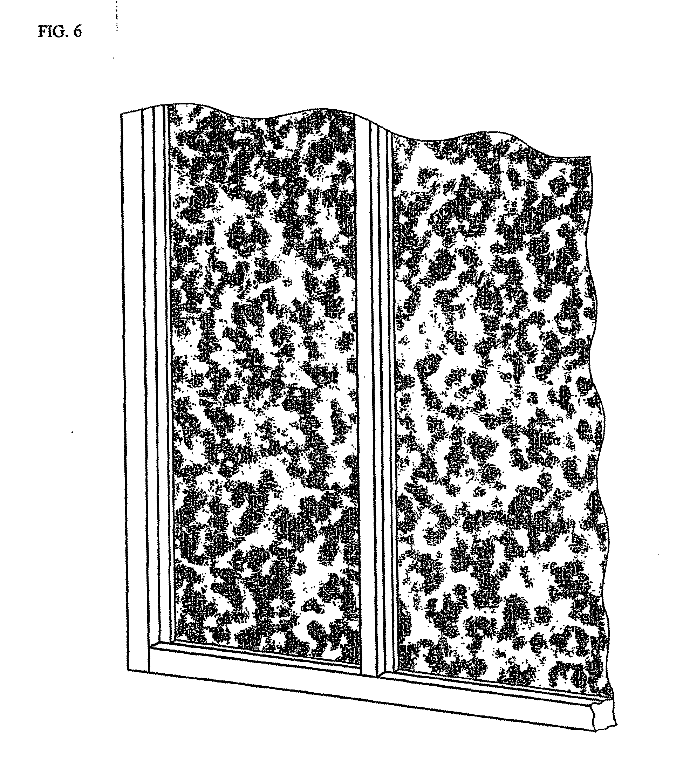

FIG. 6 depicts an example in which the lacy felt is used for a sash glass door. The lacy felt is interposed between the entire surfaces of two glass materials.

Compared with the case of using a fabric, the see-through characteristic is improved. Also, ultraviolet shielding, heat wave shielding, and flame resistance can be improved compared with the case of using glass only.

INDUSTRIAL APPLICABILITY

According to the manufacturing method of the present invention, by forcefully (intentionally) causing pilling, a material with voids across the entire fabric can be manufactured and, in particular, a lacy felt with an adjusted voidage can be readily obtained. The obtained lacy felt can be used, as required, for clothing, ornamentation, sundry articles, glass products, or furniture.

**Claims**

1. A method of manufacturing a lacy felt, **characterized by** comprising: placing on a fabric a wrap that is interposed between sheet felts; and felting the wrap to forcefully cause pilling so as to obtain a felt with voids.

2. The method of manufacturing a lacy felt, according to claim 1, **characterized in that** the wrap is simply made of wool.

3. The method of manufacturing a lacy felt, according to claim 1, **characterized in that** the wrap is made of wool and a natural fiber other than wool.

4. The method of manufacturing a lacy felt, according to claim 1, **characterized in that** the wrap is made of wool and a chemical fiber.

5. The method of manufacturing a lacy felt, according to claim 1, **characterized in that** the wrap is made of any one of wool, a natural fiber other than wool, and a chemical fiber.

6. The method of manufacturing a lacy felt, according to claim 4 or 5, **characterized in that** the chemical fiber is a temperature-sensitive fiber.

7. A lacy felt, wherein voids are formed by forcefully causing pilling.

8. A lacy felt made of a temperature-sensitive fiber, wherein voids are formed by forcefully causing pilling.

9. The lacy felt according to claim 7 or 8, **characterized in that** the lacy felt is applied to a glass product.

FIG. 1

FIG. 2

FIG. 3

FIG. 4

FIG. 5

FIG. 6

FIG. 7

| | TEST SAMPLE | DEGREE OF VOIDAGE | | |
|---|---|---|---|---|
| | | LARGE | MIDDLE | SMALL |
| RATIO (%) | 1 | 30.3 | 29.6 | 4.3 |
| | 2 | 27.1 | 30.4 | 3.6 |
| | 3 | 25.2 | 23.6 | 2.8 |
| | 4 | 27.8 | 33.8 | 1.3 |
| | 5 | 42.3 | 24.6 | 1.7 |
| | 6 | 42.7 | 36.3 | 3.0 |
| | 7 | 47.6 | 26.5 | 2.1 |
| | 8 | 25.3 | 22.0 | 1.1 |
| | 9 | 31.6 | 21.8 | 3.6 |
| | 10 | 25.8 | 29.6 | 3.2 |
| AVERAGE RATIO (%) | | 32.5 | 27.8 | 2.7 |
| STANDARD DEVIATION | | 8.4 | 5.0 | 1.1 |

## INTERNATIONAL SEARCH REPORT

| | International application No. |
|---|---|
| | PCT/JP2006/312351 |

A. CLASSIFICATION OF SUBJECT MATTER
*D06C19/00*(2006.01)i, *B32B5/26*(2006.01)i, *D04H1/42*(2006.01)i, *D06C17/00*
(2006.01)i

According to International Patent Classification (IPC) or to both national classification and IPC

B. FIELDS SEARCHED

Minimum documentation searched (classification system followed by classification symbols)
D06C3/00-29/00, D06B1/00-23/30, D06G1/00-5/00, D06H1/00-7/24,
D06J1/00-1/12, B32B5/26, D04H1/00-18/00, D06M17/00-17/10

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-299605 A  (Toray Industries, Inc.), | 7-9 |
| A | 21 October, 2003 (21.10.03), | 1-6 |
| | Claims 1, 4, 12, 13; Par. Nos. [0003], [0016] | |
| | (Family: none) | |
| | | |
| P,X | JP 2006-14770 A  (Toray Industries, Inc.), | 7 |
| P,A | 19 January, 2006 (19.01.06), | 1-6,8,9 |
| | Claim 1 | |
| | (Family: none) | |
| | | |
| A | JP 42-8435 B1  (Unitika, Ltd.), | 1-9 |
| | 12 April, 1967 (12.04.67), | |
| | Claim 1 | |
| | (Family: none) | |

|☒| Further documents are listed in the continuation of Box C. | |☐| See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 September, 2006 (14.09.06) | 26 September, 2006 (26.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/312351

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-316747 A (Jun'ichi ARAI),<br>09 December, 1997 (09.12.97),<br>Full text<br>(Family: none) | 1-9 |
| A | JP 2002-105825 A (Japan Vilene Co., Ltd.),<br>10 April, 2002 (10.04.02),<br>Claim 1<br>(Family: none) | 1-9 |
| A | JP 47-43493 A (Toyobo Co., Ltd.),<br>19 December, 1972 (19.12.72),<br>Claim 1<br>(Family: none) | 1-9 |
| A | JP 55-116862 A (Hi Yomoshiki Kabushiki Kaisha),<br>08 September, 1980 (08.09.80),<br>Claim 1<br>(Family: none) | 1-9 |
| A | JP 2001-89958 A (Toyobo Co., Ltd.),<br>03 April, 2001 (03.04.01),<br>Claims 1, 5<br>(Family: none) | 1-9 |
| A | JP 4-308269 A (Kuraray Co., Ltd.),<br>30 September, 1992 (30.09.92),<br>Claim 1<br>(Family: none) | 1-9 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7126428 A
- JP 2004308403 A